# EUROPÄISCHE PATENTSCHRIFT

(11) **EP 0 559 113 B1**
(45) Veröffentlichungstag und Bekanntmachung des Hinweises auf die Patenterteilung: **02.08.1995**
(21) Anmeldenummer: 93103193.4
(22) Anmeldetag: 28.02.1993
(51) Int. Cl.: C09K 9/02

(54) **Material mit temperaturabhängiger Lichttransmission**
Material with temperature dependent light transmission
Matériau dont la transmission de lumière dépend de la température

(30) Priorität: 29.02.1992 DE 4206317
(43) Veröffentlichungstag der Anmeldung: 08.09.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: Eck, Wolfgang, W-7812 Bad Krozingen (DE); Cantow, Hans-Joachim, W-7800 Freiburg (DE); Wittwer, Volker, W-7800 Freiburg (DE)
(74) Vertreter: Münich, Wilhelm, Dr.

(56) Entgegenhaltungen:
- EP-A- 0 181 485
- PATENT ABSTRACTS OF JAPAN vol. 11, no. 115 (C-415)10. April 1987 & JP-A-61258853

## Beschreibung

### Technisches Gebiet

Die Erfindung bezieht sich auf ein Material mit temperaturabhängiger Lichttransmission.

Derartige Materialien werden beispielsweise als Überhitzungsschutz eingesetzt: Oberhalb der Trübungstemperatur wird ein unter der Mischung liegendes Substrat (z.B. Solarkollektoren, Häuserwände etc.) vor weiterer Erwärmung durch einfallende Strahlung (sichtbares Licht, UV-, IR-Strahlung) geschützt.

Weitere mögliche Anwendungen derartiger Materialien sind die temperaturabhängige Verdunkelung, die Temperaturanzeige sowie temperatur- und wellenlängenabhängige Strahlungsfilter, da die Lichttransmission im trüben Zustand wellenlängenabhängig ist.

### Stand der Technik

Materialien mit temperaturabhängiger Lichttransmission sind beispielsweise aus der DE 35 45 892 A1 bekannt, in der eine optische Vorrichtung beschrieben ist, die eine Flüssigkeitsschicht aufweist, welche ein Polymer mit Flüssigkeitsabsorptions- und freigabevermögen enthält, das bei thermischer Einwirkung eine Flüssigkeit absorbiert bzw. freigibt.

Weitere Beispiele für Materialien mit temperaturabhängiger Lichttransmission sind aus der DE 34 36 476 A1 sowie der US-A-4,881,798 bekannt.

Bei den in diesen Druckschriften beschriebenen Polymersystemen wird der Effekt der Entmischung von Polymersystemen oberhalb einer bestimmten Temperatur in unvernetzten Polymersystemen ausgenutzt. In solchen Systemen ist die Entmischung aufgrund des unbegrenzten Phasenwachstums oberhalb der Entmischungstemperatur meist nicht völlig oder nur sehr langsam reversibel. Die Ent- und Vermischung sind nicht beliebig oft zu wiederholen, und das Material kann nicht beliebig lange im entmischten Zustand gehalten werden, ohne die Reversibilität des Vorgangs einzubüßen. Darüberhinaus kriechen bzw. fließen unvernetzte Polymermischungen bei erhöhter Temperatur und zeigen deshalb mangelnde mechanische Stabilität.

### Darstellung der Erfindung

Der Erfindung liegt die Aufgabe zugrunde, Materialien mit temperaturabhängiger Lichttransmission anzugeben, bei denen die Änderung der Lichttransmission vollständig reversibel ist, und mittels derer kostengünstig große Flächen belegt werden können.

Eine erfindungsgemäße Lösung dieser Aufgabe ist im Anspruch 1 angegeben. Weiterbildungen der Erfindung sind Gegenstand der Ansprüche 2 folgende.

Eine erfindungsgemäße Lösung dieser Aufgabe wird dadurch erreicht, daß das Material eine Mischung von zwei oder mehr Polymeren aufweist, von denen wenigstens eines vernetzt ist, und die unterhalb einer bestimmten Temperatur mischbar sind, und die sich oberhalb dieser Temperatur entmischen.

Erfindungsgemäß werden also interpenetrierende Polymer-Netzwerke eingesetzt. Die Polymere sind unterhalb einer bestimmten Temperatur mischbar und entmischen sich oberhalb dieser Temperatur (LCST-Verhalten). Unterhalb der Entmischungstemperatur sind derartige interpenetrierende Polymer-Netzwerke optisch klar, oberhalb der Entmischungstemperatur sind sie milchig trüb und zeigen aufgrund der Lichtstreuung des phasengetrennten Systems reduzierte Lichttransmission, wenn die Brechungsindices der Komponenten nicht übereinstimmen. Der Vorgang der Entmischung ist unterhalb der Entmischungstemperatur völlig reversibel.

Bei vernetzten Polymermischungen (semiinterpenetrierenden Netzwerken) ist in der Literatur bisher nur ein Beispiel für LCST-Verhalten bekannt (Polymer Preprints 1989, 30(1), 111), ohne daß dort jedoch von der Reversibilität der Entmischung die Rede wäre oder die hier angesprochene Anwendung angedeutet wäre.

Die erfindungsgemäßen Materialien haben gegenüber dem Stand der Technik eine Reihe von Vorteilen:
Der Entmischungvorgang ist schnell und völlig reversibel; d.h. nach Abkühlung unter die Entmischungstemperatur verschwindet die Trübung in kurzer Zeit wieder vollständig. Der Prozeß der Ent- und Vermischung ist beliebig oft zu wiederholen und das Material kann beliebig lange im entmischten Zustand gehalten werden, ohne daß sich an der Reversibilität und an anderen Materialeigenschaften etwas ändert.

Das Phasenwachstum während der Entmischung ist begrenzbar und die Größe der Phasen im entmischten Zustand gezielt steuerbar. Hierdurch läßt sich auch das Ausmaß der Trübung im entmischten Zustand regulieren.

Die Geschwindigkeit des Ent- und Vermischungsvorganges ist veränderbar.

Die Breite des Temperaturbereichs, in dem die Trübung auftritt, ist regulierbar.

Die Mischung zeigt bei erhöhter Temperatur kein Kriechen. Sie benötigt somit keine Trägersubstanz zur Erhaltung ihrer mechanischen Stabilität.

Die genannten neuen Eigenschaften der Mischung werden durch folgende Maßnahmen erhalten:
Zentrale Maßnahme ist die Vernetzung mindestens einer Komponente der Polymermischung. Somit kann man die Mischung als interpenetrierendes, oder falls nur eine Komponente vernetzt ist, als semi-interpenetrierendes Netzwerk bezeichnen. Diese Maßnahme begrenzt das Wachstum der Phasen im trüben Zustand, steuert ihre Größe, ermöglicht so die schnelle Reversibilität der Entmischung und verhindert das Kriechen des Materials.

Insbesondere werden die erfindungsgemäßen Eigenschaften durch folgende Maßnahmen erreicht:
Ein Teil der nicht vernetzten Komponente(n) (im folgenden mobile Komponente(n) genannt) kann auf die vernetzte(n) Komponenten aufgepfropft sein. Dies erleichert die Vermischung der getrennten Phasen.

Die Größe der Phasen im entmischten Zustand wird durch die Vernetzungsdichte bestimmt; geringere Vernetzungsdichte ergibt größere Phasen und stärkere Trübung.

Die Geschwindigkeit der Ent- und Vermischung wird beeinflußt durch:
a) den Abstand der Trübungstemperatur von der Glastemperatur der Mischung; Vergrößerung des Abstandes erhöht die Geschwindigkeit. Zur Erzielung hoher Vermischungsgeschwindigkeit sollte die Glastemperatur wenigstens 50 Grad, vorzugsweise 100 Grad unter der Trübungstemperatur liegen.
b) der Anteil der mobilen Komponente(n) an der Mischung; Erhöhung des Anteils erhöht die Geschwindigkeit.
c) den Anteil der mobilen Komponente(n), der auf die vernetzte(n) Komponente(n) aufgepfropft ist; Erhöhung des Pfropfungsgrades vergrößert die Geschwindigkeit.
d) die Vernetzungsdichte; höhere Vernetzungsdichte ergibt kleinere Phasengrößen und geringere Trübung im entmischten Zustand und somit schnellere Vermischung beim Abkühlen.
e) die Wahl der mobilen Komponente(n); höhere Mobilität (d.h. niedrigere Glastemperatur, kleineres Molekulargewicht und geringere Viskosität) erhöht die Geschwindigkeit.

Die Breite des Temperaturbereichs, in dem die Trübung auftritt, läßt sich durch die Vernetzungsdichte beeinflussen; höhere Vernetzungsdichte verbreitert den Bereich. Durch Herabsetzen der Vernetzungsdichte läßt sich eine scharfe Trübungstemperatur erreichen. Durch hohe Vernetzungsdichte kann sich auch die Trübungstemperatur erhöhen.

Falls eine oder mehrere Komponenten der Mischung Copolymere sind, vergrößert sich die Breite des Temperaturbereichs, in dem eine Zunahme der Trübung festzustellen ist, mit steigender chemischer Uneinheitlichkeit der Copolymeren. Unter chemischer Uneinheitlichkeit der Copolymeren wird das Auftreten von verschiedenen Copolymermolekülen mit unterschiedlichem prozentualen Gehalt der verschiedenen Comonomeren verstanden.

Weiterhin kann durch hohe Vernetzungsdichten sich auch die Trübungstemperatur erhöhen.

Die Trübungstemperatur der Mischung kann ferner durch das Mischungsverhältnis der Komponenten, oder, falls eine oder mehrere Komponenten Copolymere sind, durch die prozentuale Zusammensetzung der Copolymeren variiert werden. Bei höherem Molekulargewicht der mobilen Komponente(n) sinkt die Trübungstemperatur. Die entscheidende Rolle für Mischbarkeit und Lage der Trübungstemperatur spielt selbstständlich die chemische Natur der Komponenten.

Im folgenden soll die Erfindung zunächst am Beispiel einer binären Mischung exemplarisch erläutert werden:

### Zwei Polymere A und B bilden untereinander Wasserstoffbrückenbindungen aus

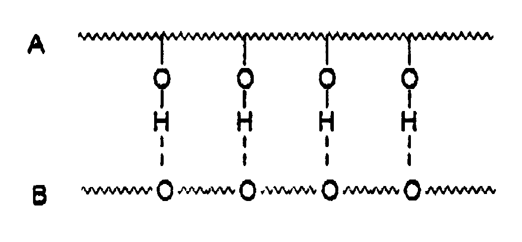

Die Polymeren A und B mischen sich bei Raumtemperatur und entmischen sich oberhalb einer bestimmten Temperatur. Die Entmischung kann symbolisiert werden durch das Aufbrechen der Wasserstofffbrückenbindungen. Je mehr Wasserstoffbrückenbindungen zwischen den Polymeren vorliegen, desto höher liegt die Entmischungstemperatur. Wasserstoffbrückenbindungen sind jedoch kein notwendiger Bestandteil dieser Erfindung; auch viele andere verträglichkeitsvermittelnde Mechanismen wie ionische Wechselwirkungen oder intramolekulare Abstoßung in Copolymeren sind möglich.

Besondere Maßnahmen der vorliegenden Erfindung:

### Vernetzung des Polymeren A:

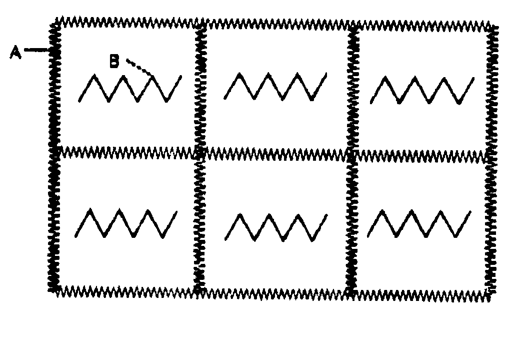

u.U. teilweise Pfropfung des Polymeren B auf das Netzwerk A: 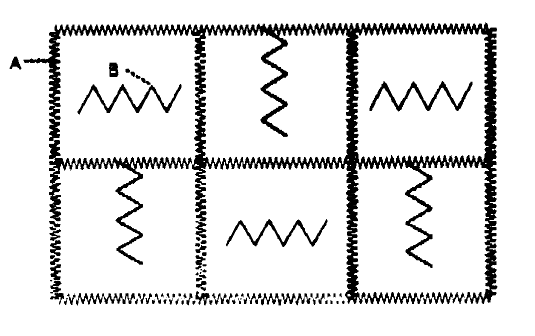
Dies wird im folgenden anhand eines konkreten Beispiels erläutert:

### Polymer A: Copolymer aus Styrol und Hydroxyethylmethacrylat (HEMA)

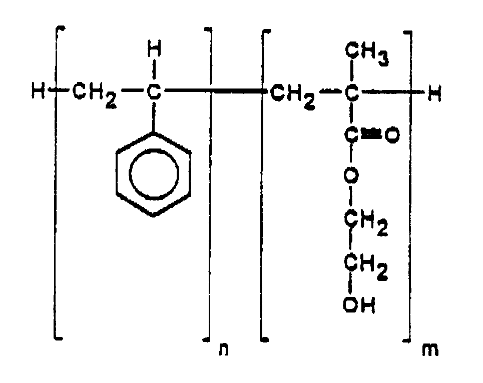

### Polymer B: Polypropylenoxid

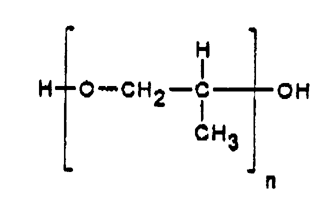

Das Polymer A wird unter gleichzeitiger Pfropfung von Polymer B auf das Netzwerk A mit einem trifunktionellen Isocyanat vernetzt, z.B.: 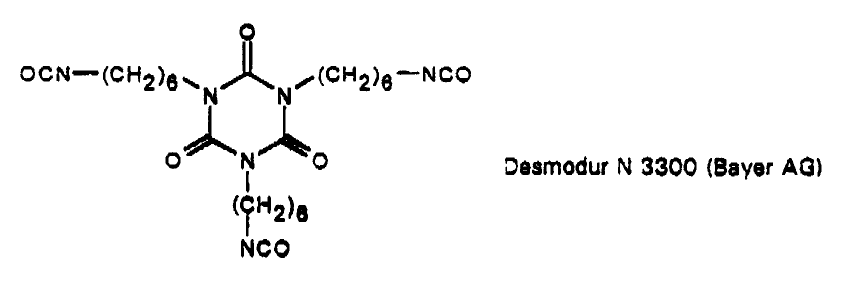
Desmodur N 3300(Bayer AG) Die Pfropfung des Polymeren B kann im vorliegenden Beispiel durch Blockieren der endständigen Hydroxylgruppen (z.B. durch Veresterung) verhindert werden, so daß reine, nicht gepfropfte (semi)-interpenetrierende Polymer-Netzwerke entstehen.

Hierzu sollen im folgenden Herstellungsbeispiele angegeben werden:
1 g eines Copolymeren aus Styrol und Hydroxyethylmethacrylat (Molekulargewicht M_{w} = 100000 (bestimmt durch Gelpermeationschromatographie gegen Polystyrol-Standards in Chloroform), HEMA-Gehalt: 6 mol%, 1 g Polypropylenoxid (M_{w} = 4000, Fa. Aldrich) und 20 mg Desmodur N 3300 (Bayer AG) werden im 5 ml Toluol gelöst, die Mischung in eine Petrischale gegeben und 16 h im Vakuum auf 70°C erhitzt. Es resultiert ein klarer Film, der beim Erhitzen auf 80°C plötzlich weißlich-trübe wird. Beim Abkühlen wird der Film wieder völlig klar. Der Prozeß der Ver- und Entmischung ist beliebig oft zu wiederholen.

Als Beispiel für die Regulierbarkeit der Trübungstemperatur in nach der obigen Vorschrift hergestellten Mischungen mit dem angegebenen Vernetzergehalt sei das folgende Phasendiagramm angeführt: 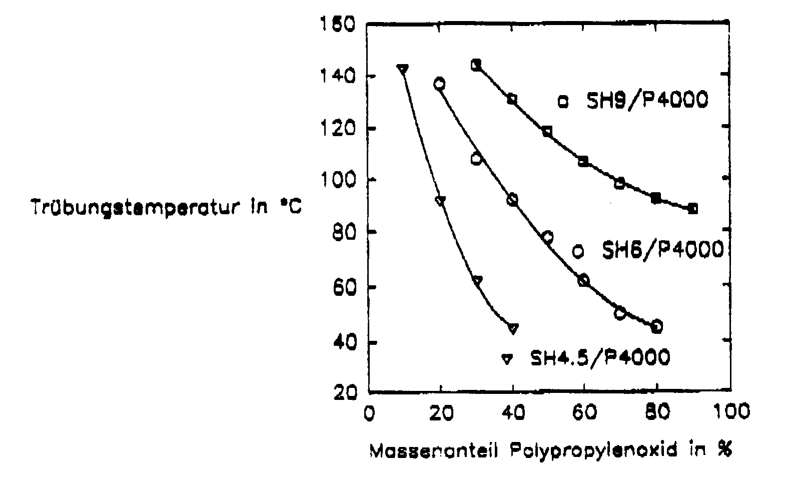
Es bedeuten: SHx: Styrol-HEMA-Copolymer (M_{w}=100.000) mit x mol-% HEMA, P4000: Polypropylenoxid MW 4000.

Durch Steigerung des HEMA-Gehalts des Copolymeren oder durch Herabsetzung des Polypropylenoxid-Gehalts der vernetzten Mischung läßt sich die Trübungstemperatur heraufsetzen.

Das folgende durch Zug-Dehnungs-Messungen ermittelte Diagramm zeigt, daß durch die Vernetzung der Mischung ihr Kriechen verhindert wird, wie es für eine langanhaltende Funktion notwendig ist (gemessen auf einem Unstron 4204, Dimensionen der Filme: 20 mm x 4 mm x 1 mm): 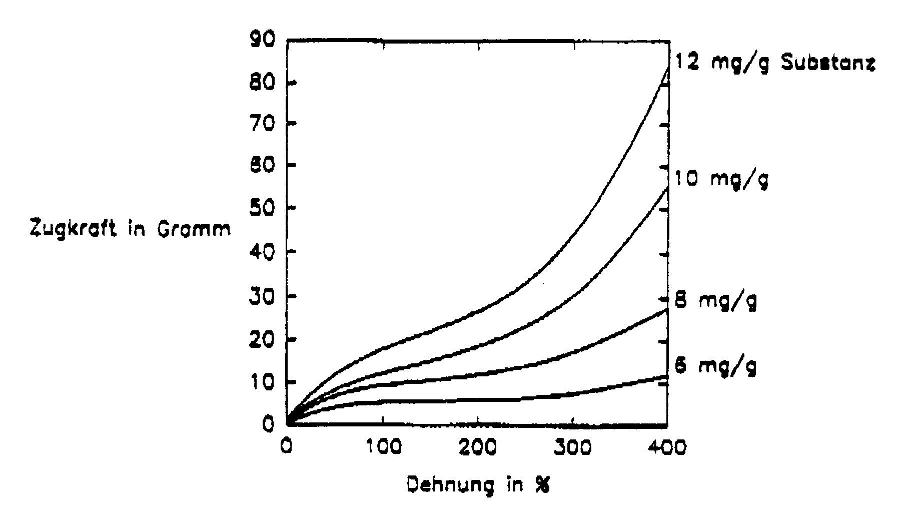
Rechts neben den Kurven sind die Mengen an Vernetzer (Desmodur H 3300) pro Gramm der nach der obigen Vorschrift hergestellten Substanz angegeben. Die Proben zeigen typisches kautschukelastisches Verhalten; sie kriechen auch bei geringen Vernetzermengen nicht.

### Weitere Herstellungsbeispiele

1g Phenoxy PKHH (Union Carbide Corp.), von dessen Hydroxygruppen 23 mol-% durch Reaktion mit Acetanhydrid/Pyridin acetyliert wurden, 1 g Polyvinylmethylether (M_{w} = 20.000) und 40 mg ECN 1299 (Epoxyy-Cresol-Novolac, Ciby-Geigy AG) als Vernetzer werden in 6 ml Tetrahydrofuran gelöst. Nach Auflösung von 10 mg 1,4-Diazabicyclo(2.2.2)octan als Vernetzungskatalysator gießt man die Mischung in eine Petrischale, verdampft zunächst bei 200 mbar und 25°C einen Großteil des Lösungsmittels und erhitzt das Gemisch dann 40 Stunden lang bei 200 mbar auf 75°C. Man erhält einen glasklaren Film, der beim Erhitzen auf 92°C weißlich-trübe wird. Beim Abkühlen wird der Film wieder völlig klar. Der Prozeß der Ent- und Vermischung ist auch hier beliebig oft zu wiederholen.

1 g Polyvinylphenol (MW 30.000, Fa. Polysciences), 1 g Polybutylacrylat (M_{w} = 21.000, Mₙ = 12.000, bestimmt durch Gelpermeationschromatographie in Toluol gegen Polystyrol-Standards), 30 mg ECN 1299 (Ciba-Geigy AG) als Vernetzer und 10 mg 1,4-Diazabicyclo(2.2.2)octan werden in 6 ml Tetrahydrofuran gelöst und in eine Petrischale gegossen. Man verdampft bei 200 mbar und 25°C zunächst einen Großteil des Lösungsmittels und erhitzt dann 24 Stunden bei 200 mbar auf 75°C. Man erhält einen glasklaren Film, der beim Erhitzen auf 87°C plötzlich weißlich trübe und beim Abkühlen wieder völlig klar wird. Ent- und Vermischung sind beliebig oft wiederholbar, und das System kann beliebig lange im entmischten Zustand gehalten werden, ohne daß sich an der Reversibilität und anderen Systemeigenschaften etwas ändert.

In jeweils 2 ml Toluol werden einige Lösungen aus je 250 mg eines Copolymeren aus Styrol und Hydroxyethylmethacrylat (M_{w} = 6000, 6% Ethylenoxidgehalt, BASF AG) und 1 mg 1,4-Diazabicyclo(2.2.2)octan hergestellt. Jede dieser Lösungen wird mit verschiedenen Mengen an Desmodur N 3300 versetzt und die einzelnen Mischungen in Petrischalen von 3 cm Durchmesser gegeben. Nach dem Abdampfen eines Großteils des Lösungsmittels bei 200 mbar und 25°C erhitzt man 24 Stunden lang bei 50 mbar auf 40° C. Man erhält Filme, die bei verschiedenen Temperaturen die im folgenden Diagramm gezeigten Lichttransmissionswerte aufweisen (gemessen in linearer Durchstrahlung der Proben und Integration über den Wellenbereich von 400 nm bis 800 nm). 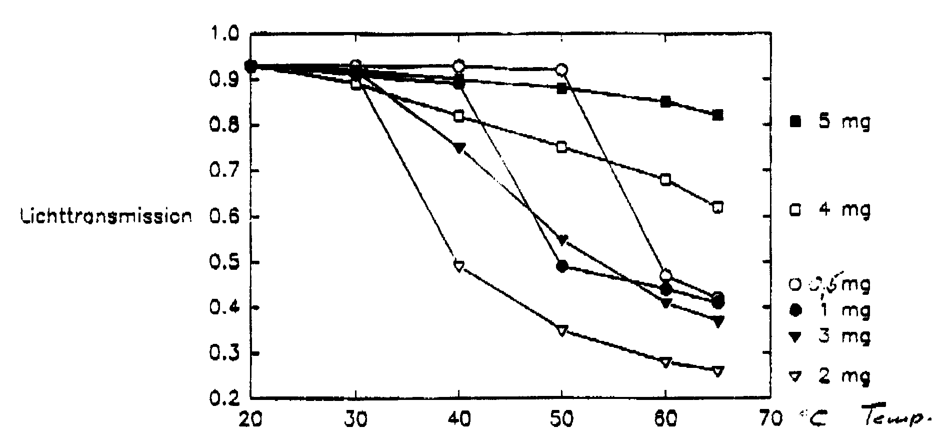
Rechts neben den Kurven sind die Mengen an Desmodur N 3300 pro 500 mg Substanz angegeben. Man erkennt, wie steigende Vernetzermengen zunächst den Bereich der Entmischung zu niedrigeren Temperaturen absenken und noch weiter steigende Vernetzermengen ihn wieder zu höheren Temperaturen hin anheben und gleichzeitig verbreitern. Diese Verbreiterung ist eine Folge der Herabsetzung der Phasengrößen durch höhere Vernetzermengen. Erfindungsgemäß wird der Bereich zwischen 0,5 und 5 mg Desmodur, bevorzugt 1 bis 4 mg pro 500 mg Substanz verwendet.

## Patentansprüche

1. Material mit temperaturabhängiger Lichttransmission,
dadurch **gekennzeichnet**, daß es eine Mischung von wenigstens zwei Polymeren aufweist, von denen wenigstens eines vernetzt ist, und die unterhalb einer bestimmten Temperatur mischbar sind, und die sich oberhalb dieser Temperatur entmischen.

2. Material nach Anspruch 1,
dadurch **gekennzeichnet**, daß wenigstens eines Komponente nicht vernetzt ist (semi-interpenetrierendes Netzwerk).

3. Material nach Anspruch 1,
dadurch **gekennzeichnet**, daß alle Komponenten vernetzt sind (interpenetrierendes Netzwerk).

4. Material nach einem der Ansprüche 1 bis 3,
dadurch **gekennzeichnet**, daß zur Beeinflussung der Geschwindigkeit der Ent- und Vermischung die Trübungstemperatur der Mischung eingestellt wird.

5. Material nach Anspruch 4,
dadurch **gekennzeichnet**, daß die Trübungstemperatur durch Einstellen des Mischungsverhältnis eingestellt wird.

## Claims

1. Material whose light transmission depends on temperature,
**characterized** in that it contains a mixture of a least two polymers whereof at least one is cross-linked, which are miscible below a defined temperature and which segregate above this temperature.

2. Material according to Claim 1,
**characterized** in that at least one component is non-interlaced (semi-interpenetrating network).

3. Material according to Claim 1,
**characterized** in that all the components are cross-linked (interpenetrating network).

4. Material according to any of Claims 1 to 3,
**characterized** in that the cloud point of the mixture is adjusted so as to influence the rate of the segregation and intermixing process.

5. Material according to Claim 4,
**characterized** in that the cloud point is adjusted by setting the ratio of the components of the mixture.

## Revendications

1. Matériau dont la transmission de lumière dépend de la température,
**caractérisé** en ce qu'il contient un mélange d'au moins deux polymères, dont au moins l'un est réticulé, qui sont miscibles au dessous d'un niveau de température défini et qui entrent en ségrégation au dessus de ce niveau.

2. Matériau selon la revendication 1,
**caractérisé** en ce qu'au moins un composant n'est pas réticulé (réseau semi-interpénétrant).

3. Matériau selon la revendication 1,
**caractérisé** en ce que tous les composants sont réticulés (réseau interpénétrant).

4. Matériau selon une quelconque des revendications 1 à 3,
**caractérisé** en ce que la température de louchissement du mélange est. ajusée de façon à prendre de l'influence sur la rapidité des processus de ségrégation et de mélange.

5. Matériau selon la revendication 4,
**caractérisé** en ce que la température de louchissement est ajustée par ajustage du rapport des composants.
